# EUROPEAN PATENT SPECIFICATION

(11) **EP 1 345 823 B1**
(45) Date of publication and mention of the grant of the patent: **09.11.2005**
(21) Application number: 01272387.0
(22) Date of filing: 29.11.2001
(51) Int. Cl.: B65G 17/32, G11B 7/26

(54) **CONVEYING DEVICE SUITABLE FOR CONVEYING ANNULAR PRODUCTS**
SICH ZUR BEFÖRDERUNG RINGFÖRMIGER PRODUKTE EIGNENDE FÖRDEREINRICHTUNG
DISPOSITIF CONVOYEUR DESTINE A CONVOYER DES PRODUITS ANNULAIRES

(30) Priority: 29.11.2000 NL 1016733
(43) Date of publication of application: 24.09.2003
(73) Proprietor: OTB Group B.V., 5657 EB Eindhoven (NL)
(72) Inventor: VAN DER BLIJ, Frederik, Wilhelm, NL-5654 AK Eindhoven (NL); VERBURG, Albert-Jan, NL-5654 RW Eindhoven (NL)
(74) Representative: Veldman-Dijkers, Cornelia G. C.
(86) International application number: PCT/NL2001/000864
(87) International publication number: WO 2002/051728

(56) References cited:
- DE-A- 3 540 623
- US-A- 4 553 892
- US-A- 4 670 077

## Description

This invention relates to a conveyor device suitable for conveying annular products, which conveying device is provided with at least one first and second pick-up devices which are movable relative to each other, wherein the first pick-up device is provided with a centring pin, the second pick-up device is provided with a sleeve positionable around the centring pin, at least one of the pick-up devices is provided with a supporting device, and at least one of the pick-up devices is provided with a peg extending along a longitudinal axis parallel to the centring pin or sleeve, which peg is capable of swinging about at least one axis of swing extending transversely to the longitudinal axis.

Such a conveying device, which is known from US-A-4.553.892 comprises a robot arm with a hub on which a number of annular products can be stored. The hub is provided with a sleeve forming notch which corporates with an end of a centring pin of a tool by means of which one annular product can be picked up from the stack of annular products. The annular products is held by the robot arm by means of negative pressure.

A disadvantage of this conveying device is that it is not suitable for transporting simultaneously a number of individual annular products, which can be picked up at different locations by different pickup devices.

A conveying device is also known from international patent application WO 00/50231, which is suitable for conveying optical record carriers such as CD, DVD, the CD's are moved in horizontal direction by a pick-up device comprising a horizontally movable beam. The conveying device is further provided with a second beam located under the horizontally movable beam, which second beam is movable exclusively in vertical direction. This second beam constitutes another pick-up device and is provided with a number of pegs extending transversely to the beam, which pegs, on a side remote from the beam, are provided with supporting devices comprising supporting platforms, and centring pins located on the side remote from the pegs.

The CD's or DVD's constitute annular products which are provided with a centring hole.

Conveying the annular products with the aid of this known conveying device proceeds as follows. On each supporting platform, an annular product is placed, with the centring pin extending through the hole present in the annular product. Thereupon, the beam is moved in downward direction, as a result of which the products come to rest on the horizontally movable beam, whereafter the horizontal beam is moved in horizontal direction. After this, the vertically movable beam is moved in upward direction, whereby the centring pins are inserted through the holes of the annular products. If an annular product is not accurately aligned with respect to the centring pin, the centring pin will come into contact with the edge of the hole in the annular product. If just a minor deviation is involved, the contact between the edge of the annular product and the centring pin will result in alignment of the annular product with respect to the centring pin.

This involves the risk that the edge of the hole is damaged by the centring pin, so that the annular product must be rejected.

The invention contemplates the provision of a conveying device which enables accurate positioning of an annular product around a centring pin in a simple manner, and whereby wear or damage of the product is prevented.

This object is achieved in the conveying device according to the invention in that the peg is on a side remote from the supporting device connected with a conveyor movable in a conveying direction, whereby the peg is swingable under elastic deformation.

With the aid of a conveyor, in a relatively simple manner, a number of supporting devices like for example supporting platforms supported by pegs can be moved simultaneously. The drive of the conveyor can be relatively inaccurate, while due to the swinging motion of the pegs, yet a proper alignment with respect to the pick-up device is possible. The peg will at least swing in the conveying direction and in the opposite direction. The peg is swingable under elastic deformation of the conveyor and/or the peg so that the construction of the conveying device is relatively simple. Furthermore, due to the elastic deformation, no friction or wear will occur between the peg and the conveyor.

An embodiment of the conveying device according to the invention is characterized in that the peg is movable in a direction extending parallel to the longitudinal axis, with elastic deformation of a conveyor belt of the conveyor.

Due to the elastic deformation of the conveyor belt, the peg can undergo both a translating and a rotary minor displacement relative to the conveyor belt, as a result of which a proper alignment with respect to the sleeve is possible.

In the conveying device according to the invention, the second pick-up device provided with the sleeve, together with the annular product, is positioned opposite the centring pin of the first pick-up device, whereafter the sleeve and the centring pin are moved towards each other. Then, first the sleeve comes into contact with the centring pin. If the sleeve and the centring pin are not located coaxially, then, as a result of the mutual contact between the sleeve and the centring pin, a force will be exerted on the peg as a result of which the peg will swing. It is preferred here that the peg can swing in any direction and thus can describe a segment of a sphere. The peg, the centring pin and the sleeve are thereby aligned relative to each other. Only then is the annular product transferred from the second pick-up device to the first pick-up device. In this way, the annular product is accurately positioned around the centring pin, while avoiding undesired contact between the edge of the hole in the annular product and the centring pin.

When lifting the annular product off a position wherein it is disposed around the centring pin, the sleeve is positioned over the centring pin, allowing a swinging motion of the peg to align the centring pin with respect to the sleeve. After the sleeve and the centring pin have been aligned relative to each other, the annular product is picked up by the second pick-up device.

The sleeve and the centring pin can be manufactured from materials that are suitable to be regularly brought into frictional contact with each other, so that substantially no wear of the centring pin and the cooperative sleeve will occur.

A further embodiment of the conveying device according to the invention is characterized in that the peg is bendable.

A bendable peg likewise enables a proper alignment of the centring pin connected with the peg, with respect to the sleeve cooperating therewith.

One embodiment of the conveying device according to the invention is characterized in that the first pick-up device is provided with the supporting device comprising a supporting platform, which supporting platform extends transversely to the centring pin, while the peg is connected with the supporting platform on a side remote from the centring pin.

Through the supporting platform, a relatively simple support of an annular product is obtained.

Another embodiment of a conveying device according to the invention is characterized in that the second pick-up device is provided with a gripping device disposed around the sleeve.

With the aid of the gripping device, the annular product, after alignment of the sleeve and the centring pin, can be simply picked up and subsequently be moved with the aid of the second pick-up device to a desired location.

The gripping device can be, for instance, a suction cup working with the aid of vacuum.

The invention will be further elucidated with reference to the drawings, wherein:
fig. 1 shows a side elevation of a portion of a conveying device according to the invention,
fig. 2 shows a cross section along the line II-II of the conveying device represented in fig. 1,
figs. 3 and 4 show details of the conveying device represented in fig. 1 during and upon alignment of the pick-up device with respect to the centring pin.

In the figures, corresponding parts are provided with the same reference numerals.

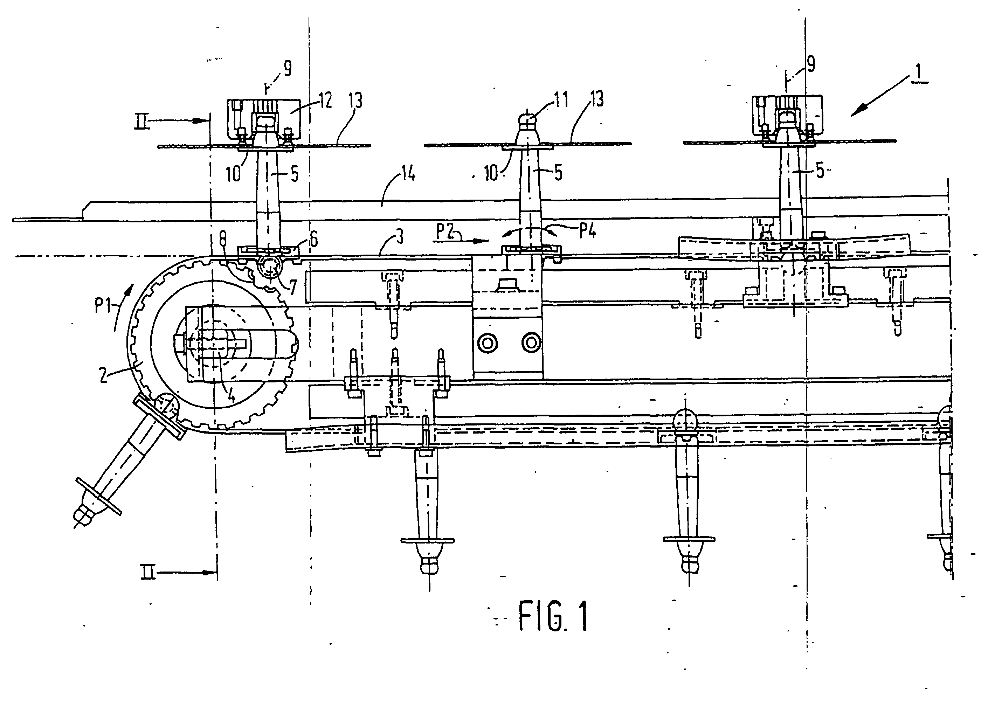

Fig. 1 shows a side elevation of a portion of a conveying device 1 according to the invention, which is provided with an endless conveyor belt 3 passed over wheels 2. Of the wheels 2, Fig. 1 only shows a single wheel 2. The wheel 2 is rotatable about axle 4 in the direction indicated by arrow P1. Attached to the conveyor belt 3 are a number of pegs 5 extending transversely to the conveyor belt 3. Adjacent the attachment 6 of each peg 5 to the conveyor belt 3, an element 7 is located. The element 7 is located on the side of the conveyor belt 3 remote from the peg 5. In each wheel 2, two diametrically opposed recesses 8 are provided in which the elements 7 can be positioned.

Each peg 5 extends along a longitudinal axis 9. Each peg 5, on a side remote from the conveyor belt 3, is provided with a supporting platform 10, extending transversely to the longitudinal axis 9. On a side remote from the peg 5, on each supporting platform 10, a centring pin 11 is arranged. The peg 5, the supporting platform 10 and the centring pin 11 constitute a first pick-up device.

The conveying device is further provided with a number of second pick-up devices 12, arranged at fixed positions with respect to the conveyer belt 3, which are at least movable in a direction extending parallel to the longitudinal axes 9.

On the supporting platforms 10 present at the top of the conveyor belt 3, annular products 13, such as CDs or DVDs can be positioned, and be conveyed with the aid of the conveyor belt 3 in the direction indicated by arrow P2. The annular products 13 are conveyed between processing apparatuses. Such processing apparatuses are known per se and will therefore not be further elucidated.

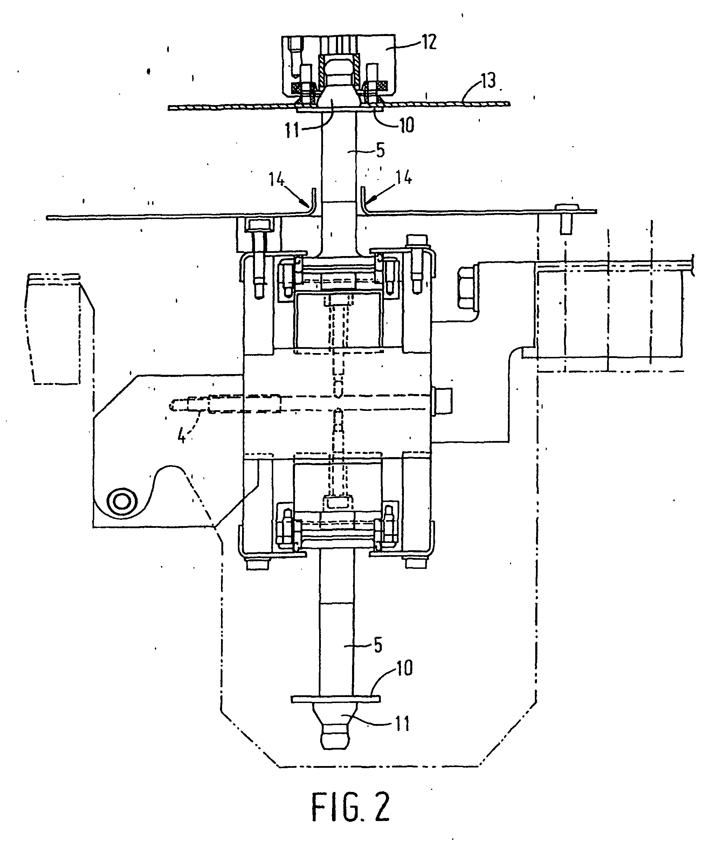

To prevent liquids provided on the annular products 13 from fouling the conveyor belt 3, the conveying device 1 is provided with two L-shaped guards 14 which, viewed in the longitudinal direction of the conveyor belt 3, are situated on opposite sides of the pegs 5 (see Fig. 2). Additionally, the L-shaped guards constitute stops of the peg in the event of relatively large swinging motion s in a direction extending transversely to the conveying direction, thereby preventing overloading of the peg.

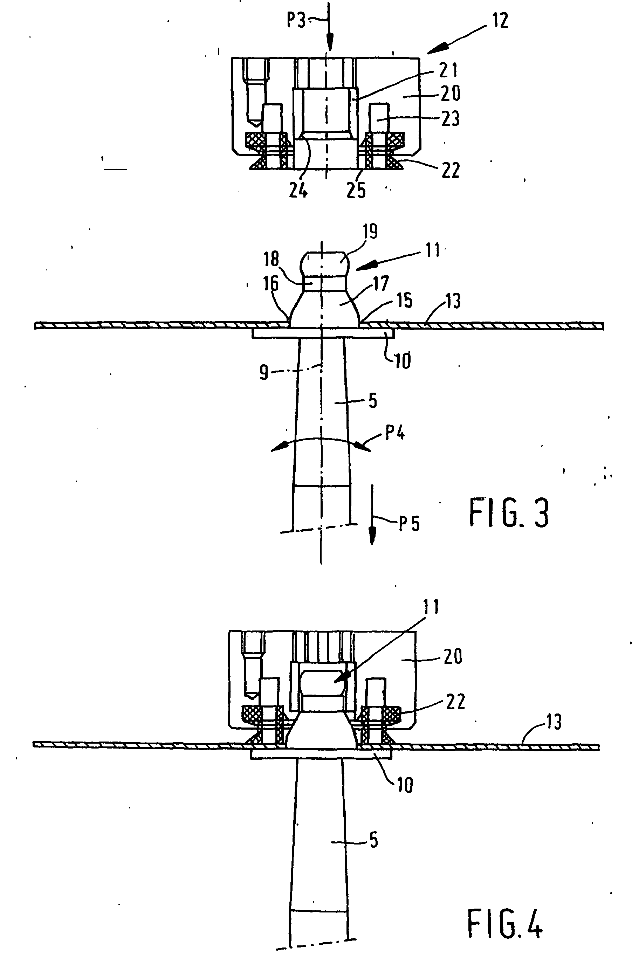

The operation of the conveying device 1 according to the invention will be further elucidated with reference to Figs. 3 and 4.

The starting point is a situation where an annular product 13 is already disposed on a supporting platform 10 of a peg 5.

As is clearly visible in Fig. 3, the centring pin 11 comprises a first portion 15, connected with the supporting platform 10, having a relatively large diameter, which diameter corresponds substantially with the diameter of the hole 16 present in the annular product 13. The first portion 15 merges via a tapering portion 17 into an annular portion 18. The annular portion 18 in turn is connected with a spherical segment 19 of which a side remote from the supporting platform 10 tapers.

As is also clearly visible in Fig. 3, the pick-up device 12 comprises a holder 20 in which a cylindrical sleeve 21 is located. The cylindrical sleeve 21 widens conically in the direction of a side proximal to the supporting platform 10. Arranged around the sleeve 21 is an annular suction cup 22 connected via ducts 23 to a vacuum device (not shown). The suction cup 22, viewed in axial direction, is located closer to the supporting platform 10 than the sleeve 21.

With the aid of the conveyor belt 3, the annular product 13 is brought to a desired position under a pick-up device 12. As soon as this position has been reached, the conveyor belt 3 is stopped. The accuracy with which the position is reached is in the order of, for instance, 0.5-1 mm.

For picking up the annular product 13 with the aid of the pick-up device 12, the holder 20 is moved in the direction indicated by arrow P3 towards the annular product 13. It is the flaring portion 24 of the sleeve 21 that first comes into contact with the tapering portion of the spherical segment 19. If the centerline of the sleeve 21 does not coincide with the longitudinal axis 9 of the peg 5 and the centring pin 11, through further displacement of the holder 20 in the direction indicated by arrow P3, a force will be exerted on the centring pin 11 as a result of which the centring pin 11 and the peg 5 connected therewith will swing in the direction indicated by the double-headed arrow P4. By displacing the holder 2Q further in the direction indicated by arrow P3, the lower edge 25 of the holder 20 will come into contact with the tapering portion 17, yielding a further centring. At the moment when the suction cup 22 comes to lie against the annular product 13, the centring pin 11, as a result of the swinging motion of the peg 5 in the direction indicated by arrow P4, has been accurately aligned with respect to the holder 20. As soon as the suction cup 22 touches the annular product 13, a vacuum is created in the suction cup 22 via the duct 23. At that moment, the situation represented in Fig. 4 has been reached. The annular product 13 can now be lifted off the supporting platform 10 by moving the holder 20 of the pick-up device 12 in a direction opposite to arrow P3. The annular product 13 is then lifted in accurate alignment with the holder 20.

After the desired operations have been performed on the annular product 13, the annular product 13 is positioned on a supporting platform 10 again with the aid of the holder 20, which, in the same manner as described above, will involve an alignment of the sleeve 21 and the centring pin 11, with the peg 5 swinging in the directions indicated by double-headed arrow P4. Also, it is possible here that through the forces exerted on the centring pin 11, the peg 5 to some extent is pressed in the direction indicated by arrow P5, into the conveyor belt 3. The conveyor belt 3 is manufactured from pliable, relatively flexible material which can simply undergo such an elastic deformation.

In the conveying device according to the invention, it is possible, in the manner described above, to realize an accurate centring of the annular products 13 with respect to the pick-up devices 12, despite a relatively inaccurate conveying system such as a conveyor belt.

It is also possible to provide the second pick-up device 12 with a swinging peg 5, which is then connected with the holder 20.

It is also possible, instead of the suction cup 22, to use a different gripping device, such as gripper arms, hooks.

It is also possible, instead of a conveyor belt, to use an incrementally rotatable table, a horizontally circulating conveyor, an x-y table, etc.

It is also possible to design the centring pin connected with the supporting platform as a centring sleeve, and to replace the sleeve arranged in the holder 20 by a pin positionable in the centring sleeve.

It is also possible to provide the supporting platform with vacuum ducts to retain this annular product.

## Claims

1. A conveyor device (1) suitable for conveying annular products, which conveying device (1) is provided with at least one first (5, 10, 11) and second (12) pick-up devices which are movable relative to each other, wherein the first pick-up device is provided with a centring pin (11), the second pick-up device (12) is provided with a sleeve (21) positionable around the centring pin (11), at least one of the pick-up devices is provided with a supporting device (10), and at least one of the pick-up devices is provided with a peg (5) extending along a longitudinal axis, parallel to the centring pin or sleeve, which peg (5) is capable of swinging (P4) about at least one axis of swing extending transversely to the longitudinal axis, whereby the supporting device (10) is provided on the peg (5), which peg (5) is on a side remote from the supporting device (10) connected with a conveyor movable in a conveying direction (P2) and is swingable under elastic deformation, whereby, when the conveyor is to use, the product is supported by the supporting device (10) whilst being conveyed in the conveying direction and is located between the supporting device (10) and the second pickup device (12) for being placed or picked up.

2. A conveying device (1) according to claim 1, **characterized in that** the peg (5) is movable in a direction parallel to the longitudinal axis, with elastic deformation of a conveyor belt (3) of the conveyor.

3. A conveying device (1) according to one of the preceding claims, **characterized in that** the peg (5) is bendable.

4. A conveying device (1) according to one of the preceding claims, **characterized in that** the peg (5) is capable of swinging in the conveying direction and opposite to the conveying direction.

5. A conveying device (1) according to one of the preceding claims, **characterized in that** the first pick-up device (5, 10, 11) is provided with the supporting device (10) comprising a supporting platform, which supporting platform extends transversely to the centring pin (11), while the peg (5) is connected with the supporting platform on a side remote from the centring pin (11).

6. A conveying device (1) according to one of the preceding claims, **characterized in that** the second pick-up device (12) is provided with a gripping device disposed around the sleeve.

7. A conveying device (1) according to any one of the preceding claims, **characterized in that** the sleeve, on a side proximal to the pin, flares conically.

8. A conveying device (1) according to any one of the preceding claims, **characterized in that** the centring pin (11), on a side remote from the supporting platform, narrows conically.

9. A conveying device (1) according to any one of the preceding claims, **characterized in that** the gripping device is provided with a suction cup.

## Patentansprüche

1. Fördereinrichtung (1), die sich zur Beförderung ringförmiger Produkte eignet, wobei die Fördereinrichtung (1) mit zumindest einem ersten (5, 10, 11) und zweiten (12) Aufnahmemitteln versehen ist, die relativ zueinander beweglich sind, wobei das erste Aufnahmemittel mit einem Zentrierbolzen (11) versehen ist, das zweite Aufnahmemittel (12) mit einer um den Zentrierbolzen (11) herum positionierbaren Hülse (21) versehen ist, zumindest eines der Aufnahmemittel mit einer Unterstützungseinrichtung (10) versehen ist und zumindest eines der Aufnahmemittel mit einem Stift (5) versehen ist, der sich entlang einer Längsachse parallel zu dem Zentrierbolzen oder der Hülse erstreckt, wobei der Stift (5) dazu geeignet ist, sich um zumindest eine sich quer zu der Längsachse erstreckenden Schwenkachse herum zu verschwenken (P4), wobei die Unterstützungseinrichtung (10) an dem Stift (5) vorgesehen ist, wobei der Stift (5) auf einer von der Unterstützungseinrichtung (10) abgewendeten Seite mit einer in eine Förderrichtung (P2) bewegbaren Fördereinrichtung verbunden ist und unter einer elastischen Deformation verschwenkbar ist, wobei das Produkt, wenn die Fördereinrichtung verwendet wird, durch die Unterstützungseinrichtung (10) unterstützt wird während es in der Förderrichtung gefördert wird und zwischen der Unterstützungseinrichtung (10) und dem zweiten Aufnahmemittel (12) angeordnet ist, um abgelegt oder aufgenommen zu werden.

2. Fördereinrichtung (1) gemäß Anspruch 1, **dadurch gekennzeichnet, dass** der Stift (5) in einer Richtung parallel zu der Längsachse bewegbar ist, mit einer elastischen Deformation eines Förderbandes (3) des Förderers.

3. Fördereinrichtung (1) gemäß einem der vorstehenden Ansprüche, **dadurch gekennzeichnet, dass** der Stift (5) biegsam ist.

4. Fördereinrichtung (1) gemäß einem der vorstehenden Ansprüche, **dadurch gekennzeichnet, dass** der Stift (5) dazu geeignet ist, sich in der Förderrichtung und entgegengesetzt der Förderrichtung zu verschwenken.

5. Fördereinrichtung (1) gemäß einem der vorstehenden Ansprüche, **dadurch gekennzeichnet, dass** das erste Aufnahmemittel (5, 10, 11) mit der Unterstützungseinrichtung (10) vorgesehen ist, die eine Unterstützungsplattform aufweist, wobei sich die Unterstützungsplattform quer zu dem Zentrierbolzen (11) erstreckt, wobei der Stift (5) mit der Unterstützungsplattform auf einer der dem Zentrierbolzen (11) abgewendeten Seite verbunden ist.

6. Fördereinrichtung (1) gemäß einem der vorstehenden Ansprüche, **dadurch gekennzeichnet, dass** das zweite Aufnahmemittel (12) mit einer Greifeinrichtung versehen ist, die um die Hülse herum angeordnet ist.

7. Fördereinrichtung (1) gemäß einem der vorstehenden Ansprüche, **dadurch gekennzeichnet, dass** sich die Hülse auf einer Seite nahe dem Bolzen konisch aufweitet.

8. Fördereinrichtung (1) gemäß einem der vorstehenden Ansprüche, **dadurch gekennzeichnet, dass** sich der Zentrierbolzen (11) auf einer der Unterstützungsplattform abgewendeten Seite konisch verengt.

9. Fördereinrichtung (1) gemäß einem der vorstehenden Ansprüche, **dadurch gekennzeichnet, dass** die Greifeinrichtung mit einem Saugnapf versehen ist.

## Revendications

1. Dispositif de convoyage (1) apte à convoyer des produits annulaires, ledit dispositif convoyeur (1) présentant au moins un premier (5, 10, 11) et un second (12) dispositifs de ramassage qui sont déplaçables l'un par rapport à l'autre, où le premier dispositif de ramassage présente un axe de centrage (11), le deuxième dispositif de ramassage (12) présente un manchon (21) pouvant être positionné autour de l'axe de centrage (11), au moins l'un des dispositifs de ramassage présente un dispositif de support (10) et au moins l'un des dispositifs de ramassage présente un piquet (5) s'étendant le long d'un axe longitudinal, parallèle à l'axe de centrage ou au manchon, ce piquet (5) étant apte à pivoter (P4) autour d'au moins un axe de pivotement s'étendant transversalement à l'axe longitudinal, par quoi le dispositif de support (10) est réalisé sur le piquet (5), ce piquet (5) se trouve sur un côté éloigné du dispositif de support (10) relié à un convoyeur déplaçable dans une direction de convoyage (P2) et est apte à pivoter sous déformation élastique par quoi, lorsque le convoyeur est en utilisation, le produit est supporté par le dispositif de support (10) tout en étant convoyé dans la direction de convoyage et se situe entre le dispositif de support (10) et le deuxième dispositif de ramassage (12) pour être placé ou ramassé.

2. Dispositif de convoyage (1) selon la revendication 1, **caractérisé en ce que** le piquet (5) est déplaçable dans une direction parallèle à l'axe longitudinal, avec une déformation élastique d'une courroie de convoyage (3) du convoyeur.

3. Dispositif de convoyage (1) selon l'une des revendications précédentes, **caractérisé en ce que** le piquet (5) peut être courbé.

4. Dispositif de convoyage (1) selon l'une des revendications précédentes, **caractérisé en ce que** le piquet (5) est apte à pivoter dans la direction de convoyage et opposé à la direction de convoyage.

5. Dispositif de convoyage (1) selon l'une des revendications précédentes, **caractérisé en ce que** le premier dispositif de ramassage (5, 10, 11) présente le dispositif de support (10) comprenant une plate-forme de support, ladite plate-forme de support s'étendant transversalement à l'axe de centrage (11) tandis que le piquet (5) est relié à la plate-forme de support sur un côté éloigné de l'axe de centrage (11).

6. Dispositif de convoyage (1) selon l'une des revendications précédentes, **caractérisé en ce que** le deuxième dispositif de ramassage (12) présente un dispositif de préhension disposé autour du manchon.

7. Dispositif de convoyage (1) selon l'une des revendications précédentes, **caractérisé en ce que** le manchon, sur un côté proximal à l'axe, s'évase d'une manière conique.

8. Dispositif de convoyage (1) selon l'une des revendications précédentes, **caractérisé en ce que** l'axe de centrage (11), sur un côté éloigné de la plate-forme de support, rétrécit d'une manière conique.

9. Dispositif de convoyage (1) selon l'une des revendications précédentes, **caractérisé en ce que** le dispositif de préhension présente une coupelle d'aspiration.
